# EUROPÄISCHE PATENTSCHRIFT

(11) **EP 0 875 269 B1**
(45) Veröffentlichungstag und Bekanntmachung des Hinweises auf die Patenterteilung: **08.01.2003**
(21) Anmeldenummer: 98107608.6
(22) Anmeldetag: 27.04.1998
(51) Int. Cl.: B01D 29/64, B01D 29/66, B01D 33/46, B01D 33/48, B01D 29/15, B01D 29/46

(54) **Rückspülfilter**
Backwash filter
Filtre à lavage à contre-courant

(30) Priorität: 02.05.1997 DE 19718563
(43) Veröffentlichungstag der Anmeldung: 04.11.1998
(73) Patentinhaber: EWK Umwelttechnik GmbH, 67655 Kaiserslautern (DE)
(72) Erfinder: Ohlenschläger, Peter, Dipl.-Ing., 67657 Kaiserslautern (DE); Bernhardt, Harri, Dipl.-Ing., 66625 Nohfelden (Bosen) (DE)
(74) Vertreter: Schmitt, Meinrad, Dipl.-Ing.

(56) Entgegenhaltungen:
- EP-A- 0 049 746
- US-A- 5 443 726

## Beschreibung

Die Erfindung bezieht sich auf einen Rückspülfilter gemäß den im Oberbegriff des Patentanspruchs 1 angegebenen Merkmalen.

Aus der EP-A-0 049 746 ist ein derartiger Rückspülfilter bekannt, welcher in einem Behälter einen radial von außen nach innen durchströmbaren und ratationssymmetrisch ausgebildeten Siebkorb enthält. Außerhalb des Siebkorbs ist ein Reinigungselement angeordnet, welches aus wenigstens einem Blech oder Profil besteht und dessen Trennwände eine Ausschleusekammer umgeben. Das Reinigungselement enthält einen an der Außenfläche des Siebkorbs anliegenden Abstreifer, wobei zwischen dem Abstreifer und der einen Trennwand ein vorgegebener Spalt vorhanden ist, durch welchen bei Rückspülung das Medium in die Ausschleusekammer strömt, wobei vom Siebkorb abgelöste Schmutzpartikel mitgenommen werden. Mittels einer Feder wird das Reinigungselement insgesamt, und zwar sowohl der Abstreifer als auch Teile der genannten Trennwände, an die Oberfläche des Siebkorbs angepreßt. Das aus einem oder mehreren Profilen zusammengesetzte Reinigungselement besteht aus wenigstens einem gebogenen Blech und erfordert einen erheblichen Fertigungsaufwand. Das oder die gebogenen Bleche des Reinigungselements besitzen entsprechend ihrer axialen Länge keine allzu hohe Verwindungssteifigkeit, so daß zusätzliche Maßnahmen erforderlich sind, um über die axiale Länge, insbesondere des Abstreifers, eine dichte Anlage an der Oberfläche des Siebkorbs zu erhalten.

Desweiteren ist aus der US-A-5 443 726 ein Rückspülfilter bekannt, an dessen Siebkorb außen ein Abstreifer anliegt, welcher Bestandteil einer hinteren Trennwand einer Ausschleusekammer ist. Beim Rückspülen strömt das Medium radial von innen durch den Siebkorb nach außen und gelangt durch einen Spalt zwischen dem Siebkorb und einer vorderen Trennwand in die Ausschleusekammer. Das durch die Ausschleusekammer strömende Medium nimmt die mittels des Abstreifers im Bereich der hinteren Trennwand der Ausschleusekammer abgelösten Schmutzpartikel mit. Ein Teil der Schmutzpartikel kann ferner in Drehrichtung des Siebkorbs hinter dem Abstreifer außerhalb der Ausschleusekammer freigesetzt werden, wobei die Ableitung derartiger Schmutzpartikel einen zusätzlichen Arbeits- und Zeitaufwand erfordert. Die Befestigung der Ausschleusekammer im Inneren des Behälters erfordert einen nicht unerheblichen Aufwand.

Ferner ist aus der EP-A-0 557 258 ein Rückspülfilter mit einem fest angeordneten Siebkorb bekannt, an dessen Innenfläche ein im Siebkorb drehbarer Abstreifer federnd anliegt. Das zu reinigende Medium wird von oben in das Zentrum des Filters geleitet und durchströmt den Siebkorb in radialer Richtung nach außen. Aufgrund der zentralen Einströmung des Mediums wird der obere Bereich des Siebkorbs relativ schnell zugesetzt mit der Folge eines nicht unerheblichen Druckverlustes und der Notwendigkeit einer oftmaligen Rückspülung.

Schließlich ist aus der DE-B-930 925 eine gehäuseseitige Ausschleusekammer bekannt, deren Seitenwände in radialer Richtung bezüglich der Außenfläche des Siebkorbs verstellbar angeordnet sind. Die Ausschleusekammer ist als ein Kasten ausgebildet, welcher mit Gleitsitz in eine korrespondierende Ausnehmung des Filtergehäuses eingesetzt ist. Der einteilig ausgebildete Kasten erstreckt sich ebenso wie die genannte Ausnehmung praktisch über die gesamte Höhe des Filtergehäuses, und es ist insoweit ein nicht unerheblicher Konstruktions- und Fertigungsaufwand erforderlich.

Hiervon ausgehend liegt der Erfindung die Aufgabe zugrunde, den Rückspülfilter der genannten Art dahingehend weiterzubilden, daß eine funktionssichere Filterung gewährleistet werden kann, welche auch und gerade den erhöhten Auflagen und Anforderungen entspricht. Der Rückspülfilter soll einen funktionsgerechten Aufbau besitzen und einen einfachen Aufbau aufweisen und auch unter harten Betriebsbedingungen den Anforderungen entsprechen.

Die Lösung dieser Aufgabe erfolgt gemäß den im Patentanspruch 1 angegebenen Merkmalen.

Der erfindungsgemäße Rückspülfilter zeichnet sich durch eine robuste Bauweise und eine hohe Betriebssicherheit aus. Die Rückspülkammer bzw. Ausschleusekammer ist in das Filtergehäuse integriert und mit einer Rückspülklappe verbunden. Der in die Ausschleusekammer integrierte Abstreifer liegt an der Oberfläche des drehbaren, rotationssymmetrischen Filterelements an. Das als Siebkorb ausgebildete Filterelement, dessen Antriebswelle, eine Kopfplatte und zugeordneter Antrieb bilden eine Einheit. Der Siebkorb ist in zweckmäßiger Weise als Spaltrohr in robuster Ausführung und engen Spaltund Rundlauftoleranzen ausgebildet und ist mit zwei Siebkorbdeckeln auf die Antriebswelle aufgespannt. Die Antriebswelle sitzt in der Kopfplatte, welche mit dem Filtergehäuse oder Behälter dicht verbunden ist, in einer besonderen Gleitlagerung. Der Antrieb, welchem insbesondere ein Schneckengetriebe nachgeschaltet ist, und eine Laterne sind auf der Kopfplatte befestigt. Das Filtergehäuse ist als Schweißkonstruktion in bevorzugter Weise als Edelstahlrohr ausgeführt. Die Kopfplatte ist am vertikal oberen Ende des Filtergehäuses angeflanscht und kann zum Wechsel des Siebkorbs oder sonstigen Maßnahmen in einfacher Weise demontiert werden. Dem drehbaren Siebkorb ist in zweckmäßiger Weise zumindest am unteren Ende ein Dichtring zugeordnet. Der Dichtring, die untere Siebkorblagerung sowie der Kopfplattenflansch sind auf engste Toleranzen überdreht.

Die in das Filtergehäuse integrierte Rückspülkammer enthält den Abstreifer, welcher mittels Federn an den Siebkorb gepreßt wird. Die für hohe Ansprüche ausgebildete Rückspülung mit integriertem Abstreifer ist einfach aufgebaut und funktioniert unter härtesten Betriebsbedingungen. Durch die vorgeschlagene Eigenmedienrückspülung mit gleichzeitiger mechanischer Abreinigung wird selbst bei faserigen, quellenden und klebrigen Verschmutzungen eine einwandfreie Siebreinigung erreicht. Wird die Rückspülklappe geöffnet, strömt ein Teil der unter Druck stehenden Flüssigkeit rückwärts durch das Spaltsieb in die Ausschleusekammer und über diese Ausschleusekammer in einen drucklosen Dickstoffbehälter. Gleichzeitig rotiert der Siebkorb mit vorgebbarer geringer Geschwindigkeit, wobei die gesamte Sieboberfläche gereinigt wird. Die einlaufseitig angeordnete Trennwand oder Dichtleiste ist derart justiert, daß die auf den Siebkorb aufgebaute Schmutzschicht bei der Siebrotation, und zwar durch die Druckdifferenz unterstützt, in die Ausschleusekammer gespült wird. Mittels des Abstreifers, der innerhalb der Ausschleusekammer zwischen den beiden in Umfangsrichtung beabstandet angeordneten Trennwänden oder Dichtleisten vorgesehen ist, werden alle noch klebenden oder in den Siebspalten verkeilten Schmutzreste abgeschabt, wodurch permanent eine einwandfreie Abreinigung gewährleistet wird.

Der Rückspülfilter ist besonders geeignet zur Filtration von Fluß-/Kühlkreislaufwasser, Absorbatkreislaufwasser, Öle oder Emulsionen. Eine sichere Siebreinigung wird auch bei "schwierigen" Schmutzstoffen sichergestellt, wobei hohe Durchflußmengen in der Größenordnung von 1000 m³ pro Stunde funktionssicher beherrscht werden. Selbst hohe Schmutzfrachten werden mit dem Rückspülfilter sicher bewältigt, wobei eine geringe Rückspülwassermenge erforderlich ist. Ein Differenzdruck von 0-Betriebsdruck ist einstellbar, wobei Betriebsdrücke bis 6 bar als Standardausführung des Rückspülfilters vorgesehen sind und in Sonderausführungen ohne weiteres 10 oder 16 bar gewährleistet werden. Die medienberührten Teile sind in zweckmäßiger Weise aus Edelstahl gefertigt und gewährleisten somit vollen Korrosionsschutz auch bei aggressiven Flüssigkeiten. Gleitlager und Abstreifer bestehen aus lauge-/säurebeständigen Materialien.

Die verschmutzte Flüssigkeit bzw. die Trübe strömt durch einen Einstrittsstutzen in das obere Filtergehäuse und durchströmt das bevorzugt als Ringspaltsieb ausgebildete Sieb oder Filterelement insbesondere von außen nach innen. Verunreinigungen lagern sich auf dem Siebkorb ab und unterstützen den Filtriereffekt. Obgleich das anhand der Zeichnung nachfolgend erläuterte Ausführungsbeispiel für eine radiale Durchströmung des Siebkorbes von außen nach innen ausgebildet ist, kann alternativ in entsprechender Umkehrung der erfindungsgemäße Rückspülfilter auch für eine Durchströmung des zu reinigenden Mediums von innen nach außen ausgebildet sein. Das Filtrat bzw. die gereinigte Flüssigkeit strömt durch wenigstens eine Öffnung im unteren Siebdeckel in das untere Filtergehäuse und tritt durch einen Austritts- oder Filtratstutzen aus. Beim Rückspülen wird der Filterkuchen durch die Ausschleusekammer in eine Dickstoffleitung gespült. Hierzu wird eine nachgeordnete Ausschleuseklappe geöffnet, während der Siebkorb bzw. das Spaltsieb langsam rotiert. Hierbei werden problemlos die faserigen, quellenden und klebrigen Schmutzteile, welche zu Verstopfungen des Spaltsiebes neigen, mittels des Abstreifers in der Rückspülkammer abgereinigt. Die Abreinigung kann im Rahmen der Erfindung kontinuierlich oder intervallmäßig, vorzugsweise über Differenzdruck- oder Zeitsteuerung, erfolgen.

Die Erfindung wird nachfolgend anhand des in der Zeichnung dargestellten besonderen Ausführungsbeispiels näher erläutert, ohne daß insoweit eine Beschränkung erfolgt. Es zeigen:
- Fig. 1: teilweise geschnitten und teilweise in einer seitlichen Ansicht den Rückspülfilter,
- Fig. 2: einen Schnitt entlang Schnittlinie A gemäß Fig. 1,
- Fig. 3: vergrößert das Detail X gemäß Fig. 1,
- Fig. 4: vergrößert das Detail Y gemäß Fig. 1,
- Fig. 5: vergrößert das Detail Z gemäß Fig. 1.

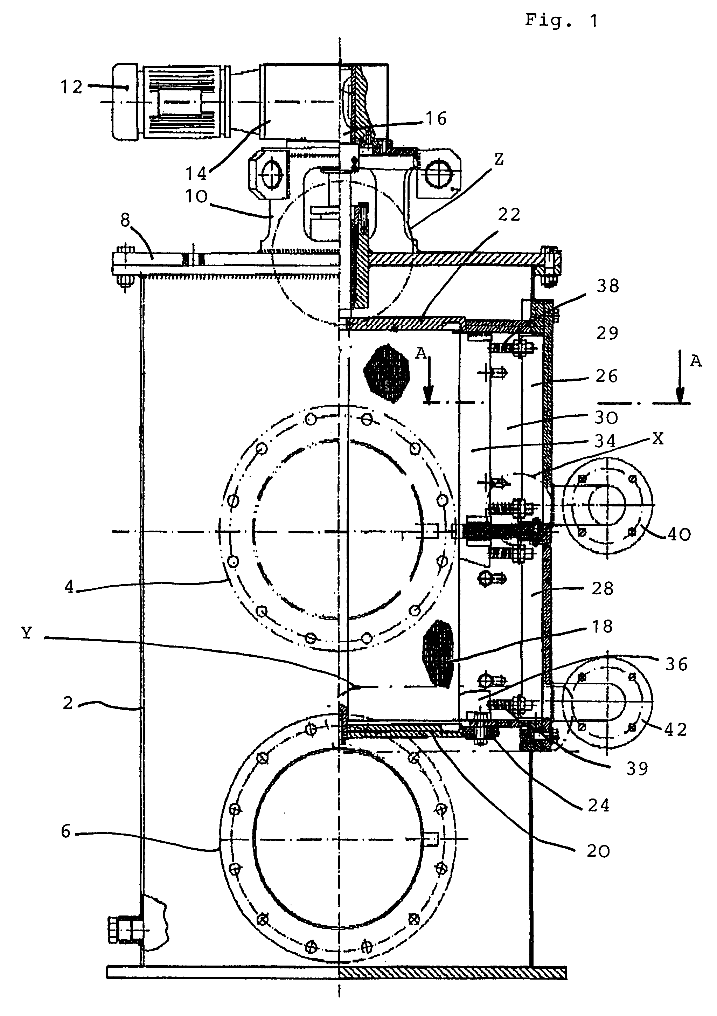

Der Rückspülfilter gemäß Fig. 1 enthält einen Behälter 2, dessen oberer Teil ein Eintrittsstutzen 4 für die Trübe (verschmutzte Flüssigkeit) und dessen unterer Teil einen Austrittsstutzen 6 für das Filtrat (gereinigte Flüssigkeit) aufweist. Der Behälter ist oben mit einer Kopfplatte 8 abgeschlossen, auf welcher über eine Laterne 10 ein Antriebsmotor 12 mit Getriebe 14 befestigt sind. Über die Kopfplatte 8 und/oder die Laterne 10 wird eine durch die Kopfplatte 8 hindurchgeführte Welle 16 abgetragen, über welche die Drehbewegung des Getriebemotors auf einen im Inneren des Behälters 2 befindlichen Siebkorb 18 übertragen wird.

Der Siebkorb 18 ist mittels einer unteren Scheibe 20 bzw. eines Siebkorbdeckels und einer oberen Scheibe 22 bzw. Siebkorbdeckels eingespannt, welche mit der Welle 16 drehfest gekoppelt und auf dieser in axialer Richtung festgespannt sind. Die durch den oberen Eintrittsstutzen 4 einströmende Trübe durchströmt den Siebkorb 18 in radialer Richtung von außen nach innen, wobei die Filtrierung erfolgt. Die untere Scheibe 20 enthält wenigstens eine Öffnung, durch welche die gereinigte Flüssigkeit in den unteren Behälterteil gelangen und von dort aus dem Eintrittsstutzen 4 ausströmen kann. Der Scheibe 20 ist radial außen, bevorzugt auf einem größeren Außendurchmesser als der des Siebkorbes 18, ein Dichtring 24 zugeordnet, welcher in zweckmäßiger Weise aus mehreren über den Umfang verteilten Dichtsegmenten aufgebaut ist. Auch der oberen Scheibe 22 ist eine entsprechende Dichtung zugeordnet, so daß die verschmutzte Flüssigkeit insgesamt den Siebkorb in radialer Richtung passieren muß.

An einer Seite des Behälters 2 sind in der Höhe des Siebkorbes 18 wenigstens eine, gemäß vorliegender Ausführungsform zwei Rückspül- bzw. Ausschleusekammern 26, 28 vorgesehen. Die wenigstens eine Kammer 26, 28 wird bezogen auf die Welle 16 mittels zwei Trennwänden, von welchen hier nur die eine Trennwand 30 zu sehen ist, von der Einströmkammer getrennt, in welche der Eintrittsstutzen 4 mündet. In der Ausschleusekammer 26, 28 ist zwischen den beiden in Umfangsrichtung beabstandet angeordneten Trennwänden oder Dichtleisten eine Abstreiferplatte 34, 36 angeordnet, deren Innenkante an der Oberfläche des Siebkorbs 18 anliegt. Entsprechend der Höhe des Behälters 2 und/oder des Siebkorbs 18 wird in zweckmäßiger Weise die Anzahl der Abstreiferplatten 34, 36 und der vertikal beabstandeten Ausschleusekammern vorgesehen. Wie nachfolgend zu erläutern ist, ist die jeweilige Abstreiferplatte 34, 36 mittels Federn 38, 39 in radialer Richtung gegen die Außenfläche des Siebkorbs 18 gedrückt. Über Stutzen 40, 42 wird beim Rückspülen der Filterkuchen durch die Ausschleusekammer über eine daran angeschlossene Leitung in einen zweckmäßig drucklosen Dickstoffbehälter gespült. In der genannten Ausschleuseleitung ist eine Rückspülklappe vorgesehen, welche zum Rückspülen geöffnet wird, so daß ein Teil der unter Druck stehenden Flüssigkeit durch den Siebkorb in die Ausschleusekammer und von dort in den genannten Dickstoffbehälter gelangt. Hierbei wird der Siebkorb, welcher bevorzugt als Spaltrohr ausgebildet ist, mittels des Antriebs in langsamer Rotation versetzt, so daß die gesamte Außenfläche des Siebrohrs bzw. Siebkorbs gereinigt wird.

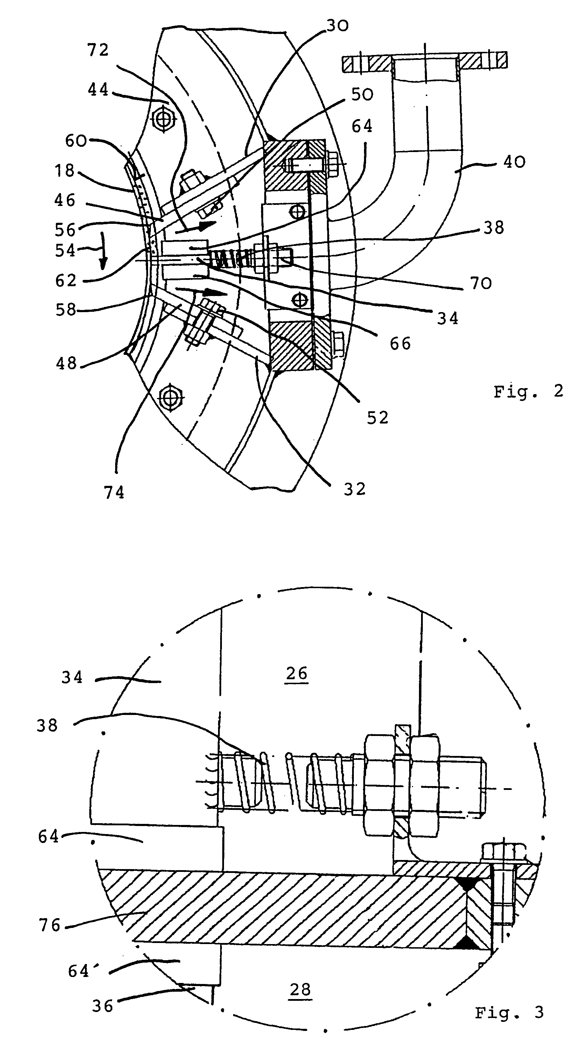

Fig. 2 zeigt einen Schnitt in einer horizontalen Ebene durch die Ausschleusekammer 26, welche mittels den bereits erwähnten Trennwänden 30, 32 von dem übrigen, den Siebkorb 18 innerhalb des Behälters 2 umgebenden Ringraum 44 trennt. Die genannten Trennwände 30, 32 sind einerseits radial außen am Behälter 2 befestigt und enthalten radial innen bezüglich des Siebkorbs 18 verstellbar angeordnete Bleche 46, 48. Zur Einstellung der optimalen gewünschten Spaltbreite sind in zweckmäßiger Weise lösbare Schraubverbindungen 50, 52 vorgesehen. Bei einer Rotationsrichtung gemäß Pfeil 54 wird der Spalt 56 zwischen der in Rotationsrichtung vorderen Trennwand 30 bzw. deren einstellbaren Bleches 46 und dem Siebkorb 18 derart vorgegeben, daß jene größer ist als die Spaltbreite 58 der in Rotationsrichtung nachfolgenden Trennwand 32 bzw. deren einstellbaren Bleches 48. Die an der äußeren Oberfläche 60 des Siebkorbs 18 anhaftenden Partikel 62 gelangen somit bei der langsamen Rotation des Siebkorbs 18 in die Rückspül- bzw. Ausschleusekammer 26.

In der Kammer 26 ist erfindungsgemäß die Abstreiferplatte 34 angeordnet, welche unter Vorspannung, insbesondere der Feder 38 an der äußeren Oberfläche 60 anliegt. Die Abstreiferplatte 34 ist mittels Führungskörpern 64, 66 in radialer Richtung bewegbar geführt, wobei mittels der Druckfeder 38 der gewünschte radiale Anpreßdruck vorgegeben wird. Hierzu ist die Druckfeder 38 radial außen mittels eines Einstellbolzens 70 bezüglich des Behälters 2 festgelegt. Am Kammerdeckel 29 ist der erwähnte Anschlußstutzen 40 befestigt. Der Kammerdeckel 29 kann bedarfsweise abgenommen werden, so daß die Ausschleusekammer 26 für Einstellarbeiten oder Servicemaßnahmen frei zugänglich ist. Beim Rückspülen werden die groben Partikel gemäß Pfeil 72 mittels der Abstreiferplatte 34 von der Oberfläche 60 entfernt und gemäß Pfeil 74 werden auch die im Siebkorb noch verbleibenden feinen Partikel herausgelöst.

Fig. 3 zeigt vergrößert die Befestigung und Lagerung der Abstreiferplatte 34 mit dem einen Führungskörper 64. Unterhalb eines Ringes 76, welcher die obere Ausschleusekammer 26 von der unteren Ausschleusekammer 28 trennt und welcher auf der einen Seite, und zwar gemäß Zeichnung rechts, mit dem Behälter und auf der anderen Seite bis nahe zum hier nicht dargestellten Siebkorb reicht, sind zum einen der obere Führungskörper 64 für die obere Abstreiferplatte 34 und zum anderen der weitere Führungskörper 64' der unteren Abstreiferplatte 36 zu erkennen. Mittels der Feder 38 wird die Abstreiferplatte 34 radial nach innen an den Siebkorb gedrückt.

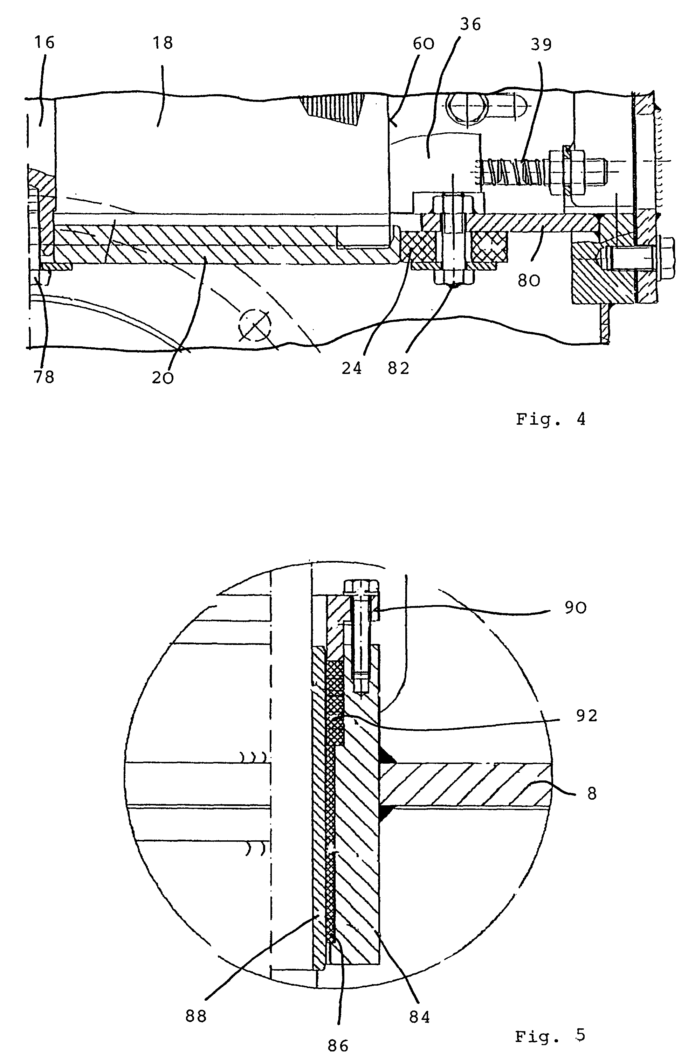

Fig. 4 zeigt den Bereich am unteren Ende des Siebkorbs 18, welcher als Spaltrohr ausgebildet ist und mittels der unteren Scheibe 20 in Verbindung mit der erläuterten oberen Scheibe bezüglich der Welle 16 festgelegt und verspannt ist. Dies erfolgt über eine Schraubverbindung 78 am unteren Wellenende. Zur Abdichtung zwischen dem drehbaren Siebkorb 18 und dem Behälter ist der Dichtring 24 vorgesehen, welcher bevorzugt aus einer Anzahl über den Umfang verteilter Segmente besteht. Diese Segmente sind bezüglich eines Ringes 80, der unter die Ausschleusekammer 28 sowie den übrigen Ringraum begrenzt und mit dem Behälter verbunden ist, mittels lösbaren Verbindungselementen 82, die hier als Schrauben ausgebildet sind, einstellbar angeordnet. Entsprechend obigen Erläuterungen ist auch die zweite, untere Abstreiferplatte 36 mittels Federn 39 an die äußere Oberfläche 60 des Siebkorbs 38 angepreßt.

Fig. 5 zeigt schließlich die Durchführung der Welle durch die Kopfplatte 8. Mit der Kopfplatte ist eine äußere Führungsbuchse 84 verbunden, welche eine Gleitbuchse 86 aufnimmt. In der Gleitbuchse 86 ist eine mit der Welle bevorzugt drehfest und in geeigneter Weise gesichert angeordnete Verschleißbuchse 88 drehbar gelagert. Am oberen Ende der Führungsbuchse 84 ist eine Stopfbuchsenbrille 90 in bekannter Weise einstellbar angeordnet, welche eine Packung, insbesondere Packungsschnur 92, zwecks Abdichtung in der erforderlichen Weise festlegt.

### Bezugszeichen

- 2: Behälter
- 4: Eintrittsstutzen
- 6: Austrittsstutzen
- 8: Kopfplatte
- 10: Laterne
- 12: Antriebsmotor
- 14: Getriebe
- 16: Welle
- 18: Filterelement / Siebkorb
- 20, 22: Scheibe / Siebkorbdeckel
- 24: Dichtring / Dichtsegment
- 26, 28: Ausschleusekammer
- 29: Kammerdeckel
- 30, 32: Trennwand / Dichtleiste
- 34, 36: Abstreiferplatte
- 38, 39: Feder
- 40, 42: Stutzen
- 44: Ringraum
- 46, 48: einstellbares Blech
- 50, 52: Einstellmittel
- 54: Pfeil
- 56, 58: Spaltbreite
- 60: äußere Oberfläche von 18
- 62: Partikel
- 64, 66: Führungskörper
- 70: Einstellbolzen
- 72, 74: Pfeil
- 76: Ring
- 78: Schraubverbindung
- 80: Ring
- 82: lösbares Verbindungselement
- 84: Führungsbuchse
- 86: Gleitbuchse
- 88: Verschleißbuchse
- 90: Stopfbuchsenbrille
- 92: Packung

## Patentansprüche

1. Rückspülfilter mit einem Behälter (2), mit einem von der zu reinigenden Flüssigkeit in radialer Richtung durchströmbaren Siebkorb (18), welcher rotationssymmetrisch ausgebildet und drehbar im Behälter (2) angeordnet ist, und mit einer einen Abstreifer (34, 36) und Trennwände (30, 32) aufweisenden Ausschleusekammer (26, 28), wobei der Abstreifer (34, 36) unter vorgebbarer Anpreßkraft an der Oberfläche (60) des Siebkorbs (18) anliegt und in Umfangsrichtung zwischen den Trennwänden (30, 32) in der Ausschleusekammer (26, 28) angeordnet ist und wobei die in Drehrichtung des Siebkorbs (18) nach dem Abstreifer (34, 36) vorgesehene Trennwand (32) als Dichtleiste ausgebildet ist, **dadurch gekennzeichnet, daß** die Trennwände (30, 32) radial außen am Behälter (2) befestigt sind und radial innen bezüglich des Siebkorbs (18) verstellbar angeordnete Bleche (46, 48) aufweisen und daß der Abstreifer als eine Abstreiferplatte (34, 36) ausgebildet und mittels in der Ausschleusekammer (26, 28) angeordneten Führungskörpern (64, 66) in radialer Richtung bewegbar geführt ist.

2. Rückspülfilter nach Anspruch 1, **dadurch gekennzeichnet, daß** zur Anpressung der Abstreiferplatte (34, 36) an den Siebkorb (18) eine Feder (38, 39) vorgesehen ist, welche mittels eines Einstellbolzens (70) bezüglich des Behälters (2) festgelegt ist.

3. Rückspülfilter nach einem der Ansprüche 1 oder 2, **dadurch gekennzeichnet, daß** die vordere Trennwand (30) und/oder deren Blech (46) derart justiert sind, daß bei Drehung des Siebkorbs (18) die auf diesem aufgebaute Schmutzschicht in die Ausschleusekammer (26, 28) gespült wird.

4. Rückspülfilter nach einem der Ansprüche 1 bis 3, **dadurch gekennzeichnet, daß** die Ausschleusekammer (26, 28) mittels eines Deckels (29) verschlossen ist, welcher bedarfsweise lösbar ist.

5. Rückspülfilter nach einem der Ansprüche 1 bis 4, **dadurch gekennzeichnet, daß** die Spaltbreite (56), welche zwischen der in Rotationsrichtung (54) des Siebkorbs (18) vorderen Trennwand (30) und dem Siebkorb (18) vorgesehen ist, größer ist als die Spaltbreite (58) zwischen der in Rotationsrichtung nachfolgenden Trennwand (32) und dem Siebkorb (18).

6. Rückspülfilter nach einem der Ansprüche 1 bis 5, **dadurch gekennzeichnet, daß** zumindest zwischen einem Siebkorbdeckel (20) und dem Behälter (2) ein Dichtring (24) vorgesehen ist und/oder daß der Dichtring (24) am Außenumfang eines unteren Siebkorbdeckels (20) anliegt und/oder daß der Dichtring (24) eine Anzahl über den Umfang verteilter Dichtsegmente enthält.

7. Rückspülfilter nach einem der Ansprüche 1 bis 6, **dadurch gekennzeichnet, daß** der Siebkorb (18) an eine durch die Kopfplatte (8) hindurchgeführten Welle (16) aufgehängt ist und/oder daß der Siebkorb (18) bezüglich einer Welle (16) zwischen dem unteren Siebkorbdeckel (20) und dem oberen Siebkorbdeckel (22) festgelegt und eingespannt ist, wobei diese Siebkorbdeckel (20, 22) drehfest mit der Welle (16) gekoppelt sind.

8. Rückspülfilter nach einem der Ansprüche 1 bis 7, **dadurch gekennzeichnet, daß** der Siebkorb (18) als Spaltsieb ausgebildet ist.

## Claims

1. A backwash filter with a container (2), including a flow-through strainer basket (18) capable of accommodating a flow, in a radial direction, of the fluid to be cleaned, said stainer basket having a rotation-symmetrical design and being located in container (2) in a swivel arrangement, and including a discharge chamber (26, 28) with a wiper (34, 36) and partition walls (30, 32) whereby the wiper (34, 36) is in contact, at a pre-determined contact pressure, with the surface (60) of the strainer basket (18) and, in a circumferential direction, is located between the partition walls (30, 32) in the discharge chamber (26, 28) and whereby the partition wall (32), provided after the wiper (34, 36) when viewed in the direction of rotation of the strainer basket (18), is formed as a seal strip,
**characterised in that**
the partition walls (30, 32) are attached radially on the outside of the container (2) and they have, in relation to the strainer basket (18), adjustably fixed plates (46, 48) located radially on the inside, and that the wiper is formed as a wiper plate (34, 36) being movably guided in a radial direction with the aid of guide bodies (64, 66) located in the discharge chamber (26, 28).

2. The backwash filter according to claim 1,
**characterised in that**
a spring (38, 39) is provided for pressing the wiper plate (34, 36) against the strainer basket (18), said spring being fixed relative to the container (2) with an adjustment pin (70).

3. The backwash filter according to claims 1 or 2,
**characterised in that**
the front partition wall (30) and/or its plate (46) are adjusted such that, during rotation of the strainer basket (18), the accumulated layer of dirt is washed into the discharge chamber (26, 28).

4. The backwash filter according to one of the claims 1 to 3,
**characterised in that**
the discharge chamber (26, 28) is closed with a lid (29) which can be removed as required.

5. The backwash filter according to one of the claims 1 to 4,
**characterised in that**
the gap width (56) which is provided between the front partition wall (30) and the strainer basket (18) when viewed in the direction of rotation (54) of the strainer basket (18), is greater than the gap width (58) between the following partition wall (32), viewed in the direction of rotation, and the strainer basket (18).

6. The backwash filter according to one of the claims 1 to 5,
**characterised in that**
at least between one strainer basket lid (20) and the container (2), a seal ring (24) is provided and/or that the seal ring (24) rests on the outer diameter of a lower strainer basket lid (20) and/or that the seal ring (24) is made up of a number of seal segments distributed around the circumference.

7. The backwash filter according to one of the claims 1 to 6,
**characterised in that**
the strainer basket (18) is mounted on a shaft (16) penetrating the top plate (8) and/or that the strainer basket (18) in relation to this shaft (16) is located and clamped between the lower strainer basket lid (20) and the upper strainer basket lid (22) whereby these strainer basket lids (20, 22) are rigidly coupled to shaft (16).

8. The backwash filter according to one of the claims 1 to 7,
**characterised in that**
the strainer basket (18) is formed as a slotted sieve.

## Revendications

1. Filtre avec lavage à contre-courant, avec un récipient (2), avec un panier filtrant (18) pouvant être traversé dans la direction radiale par le fluide à nettoyer, qui est conformé de manière symétrique en rotation et est placé rotatif dans le récipient (2), et avec une chambre d'expulsion (26, 28) présentant un racloir (34, 36) et des cloisons (30, 32), le racloir (34, 36) s'appuyant avec une force de pression prédéterminable contre la surface (60) du panier filtrant (18) et étant placé dans la direction circonférentielle entre les cloisons (30, 32) dans la chambre d'expulsion (26, 28), et la cloison (32) prévue après le racloir (34, 36) dans le sens de rotation du panier filtrant (18) étant conformée en barre d'étanchéité,
***caractérisé en ce que*** les cloisons (30, 32) sont fixées radialement à l'extérieur sur le récipient (2) et présentent des plaques (46, 48) placées de manière réglable à l'intérieur radialement par rapport au panier filtrant (18), et ***en ce que*** le racloir est conformé en plaque formant racloir (34, 36) et étant guidé de manière mobile dans la direction radiale au moyen de corps de guidage (64, 66) placés dans la chambre d'expulsion (26, 28).

2. Filtre avec lavage à contre-courant selon la revendication 1, ***caractérisé en ce que,*** pour le pressage de la plaque formant racloir (34, 36) contre le panier filtrant (18), il est prévu un ressort (38, 39) qui est fixé par rapport au récipient (2) au moyen d'un boulon de réglage (70).

3. Filtre avec lavage à contre-courant selon l'une quelconque des revendications 1 ou 2, ***caractérisé en ce que*** la cloison avant (30) et/ou ses plaques (46) sont ajustées de telle sorte que, lors d'une rotation du panier filtrant (18), la couche de saleté accumulée sur celui-ci soit rejetée dans la chambre d'expulsion (26, 28).

4. Filtre avec lavage à contre-courant selon l'une quelconque des revendications 1 à 3, ***caractérisé en ce que*** la chambre d'expulsion (26, 28) est fermée au moyen d'un couvercle (29) qui est amovible si nécessaire.

5. Filtre avec lavage à contre-courant selon l'une quelconque des revendications 1 à 4, ***caractérisé en ce que*** la largeur d'interstice (56) qui est prévue entre la cloison avant (30) dans le sens de rotation (54) du panier filtrant (18) et le panier filtrant (18) est supérieure à la largeur d'interstice (58) entre la cloison suivante (32) dans le sens de rotation (54) du panier filtrant et le panier filtrant (18).

6. Filtre avec lavage à contre-courant selon l'une quelconque des revendications 1 à 5, ***caractérisé en ce qu'***il est prévu une bague d'étanchéité (24) au moins entre un couvercle de filtre (20) et le récipient (2) et/ou ***en ce que*** la bague d'étanchéité (24) s'appuie contre la circonférence extérieure d'un couvercle inférieur (20) de panier filtrant et/ou ***en ce que*** la bague d'étanchéité (24) comprend une pluralité de segments d'étanchéité répartis sur la circonférence.

7. Filtre avec lavage à contre-courant selon l'une quelconque des revendications 1 à 6, ***caractérisé en ce que*** le panier filtrant (18) est accroché à un arbre (16) traversant la plaque de tête (8) et/ou ***en ce que*** le panier filtrant (18) est immobilisé et serré par rapport à un arbre (16) entre le couvercle inférieur de panier filtrant (20) et le couvercle supérieur de panier filtrant (22), ces couvercles de panier filtrant (20, 22) étant couplés à l'arbre (16) de manière solidaire en rotation.

8. Filtre avec lavage à contre-courant selon l'une quelconque des revendications 1 à 7, ***caractérisé en ce que*** le panier filtrant (18) est conformé en tamis à fentes.
